# EUROPEAN PATENT SPECIFICATION

(11) **EP 4 167 645 B1**
(45) Date of publication and mention of the grant of the patent: **21.10.2026**
(21) Application number: 20939544.1
(22) Date of filing: 10.06.2020
(51) Int. Cl.: H04W 8/22, H04W 48/20, H04W 48/12

(54) **SELECTION OF A WIRELESS ACCESS NETWORK DEVICE BASED ON ITS AI CAPABILITIES**
AUSWAHL EINES GERÄTS FÜR EIN DRAHTLOSES ZUGANGSNETZWERK AUF DER GRUNDLAGE SEINER KI-FÄHIGKEITEN
SÉLECTION D'UN DISPOSITIF DE RÉSEAU D'ACCÈS SANS FIL EN FONCTION DE SES CAPACITÉS EN MATIÈRE D'INTELLIGENCE ARTIFICIELLE

(43) Date of publication of application: 19.04.2023
(73) Proprietor: Beijing Xiaomi Mobile Software Co., Ltd., Beijing 100085 (CN)
(72) Inventor: HONG, Wei, Beijing 100085 (CN)
(74) Representative: dompatent
(86) International application number: PCT/CN2020/095396
(87) International publication number: WO 2021/248371

(56) References cited:
- WO-A1-2020/080989
- CN-A- 101 646 223
- CN-A- 110 730 954
- CN-A- 110 785 984
- US-A1- 2019 104 432
- US-A1- 2022 342 706
- HUAWEI, CHINA MOBILE: "Support for services using Artificial Intelligent", 3GPP DRAFT; S1-182546_REV OF 2231, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. West Palm Beach, Florida; 20180820 - 20180824, 29 August 2018 (2018-08-29), Mobile Competence Centre ; 650, route des Lucioles ; F-06921 Sophia-Antipolis Cedex ; France , XP051534992

## Description

### TECHNICAL FIELD

The present invention relates to the field of communication technologies, and in particular, relates to an access method and an access apparatus.

### BACKGROUND

As wireless communication technologies and computer technologies progress, artificial intelligence (AI) plays an increasing role on a terminal side. In related arts, the AI has been applied in many fields such as camera, voice and security in a terminal such as a smart phone to enhance user experiences. With 5G maturing and being commercialized, characteristics of a 5G network, such as high-speed, high-reliability, and low-latency, bring an opportunity for a terminal with an AI capability to intelligently collaborate with a device with the AI capability on a cloud side to achieve more functions and make the user experiences better. For example, in an era of 5G, the AI applied into the terminal may achieve more seamless collaboration with the cloud side, more natural interaction modes, and stronger interconnections and collaborations between the intelligent terminals.

A more powerful processing capability of the terminal, more data and faster feedback and decision-making the terminal with the AI capability can actually process. However, a network device and the terminal cannot share their AI capabilities with each other in the related arts. For example, the network device cannot mobilize the AI capability of the terminal, while the terminal cannot mobilize the AI capability of the network device.

CN110730954A (US2022342706US is considered to be its exact translation) discloses a method for data processing includes : receiving capability information for processing data sent by a network-side device; determining whether the capability information satisfies a preset requirement of data to be processed; and in response to the capability information satisfying the preset requirement, sending the data to be processed to the network-side device for processing.

WO2020080989A1 discloses a wireless communications system (10) and a method therein for handling of machine learning. The system comprises a central node (130, 201, 202) and one or more intermediate nodes (110, 111, 130) arranged between the central node and one or more leaf nodes (120, 122). Further, at least one out of the nodes comprises a machine learning unit (300). The system determines, by means of the machine learning unit and a machine learning model relating to at least one node out of the one or more intermediate nodes or the one or more leaf nodes, a prediction of a performance of the at least one node based on input data relating to the at least one node. Further, the system performs, based on the determined prediction, an operation relating to the at least one node, and communicates the determined prediction and/or information relating to the machine learning model to one or more other nodes.

### SUMMARY

In view of the above, the present invention provides an access method and an access apparatus.

The present invention is set out in the appended set of claims. According to a first aspect of the present invention, an access method. performed by a terminal, is provided. The method includes the features of claim 1.

According to a second aspect of the present invention, an access method, performed by a network device, is provided. The method includes the features of claim 7.

According to a third aspect of the present invention, an access apparatus is provided and includes:
one or more processors; and
a memory for storing instructions executable by the one or more processors.

The one or more processors are configured to perform the access method described in the first aspect or any one of the embodiments in the first aspect.

According to a fourth aspect of the present invention, an access apparatus is provided and includes:
one or more processors; and
a memory for storing instructions executable by the one or more processors.

The one or more processors are configured to perform the access method described in the second aspect or any one of the embodiments of the second aspect.

The technical solutions provided by the embodiments of the present invention may include the following beneficial effects. A terminal with an AI capability selects, according to an AI model type supported by each of one or more network devices, a network device that corresponds to the AI model type matching an AI model type supported by the terminal for access, which enables the terminal with the AI capability to select a wireless network matching the AI capability of the terminal itself for access, thereby improving a utilizing efficiency of the AI capabilities of the terminal and the network device.

It should be understood that the above general description and the following detailed description are only illustrative and explanatory, and are not intended to limit the present invention.

### BRIEF DESCRIPTION OF THE DRAWINGS

The accompanying drawings, which are incorporated in and constitute a part of this specification, illustrate embodiments and, together with the description, serve to explain the principles of the invention.
FIG. 1 illustrates a structural diagram of a wireless communication system according to an example.
FIG. 2 illustrates a flowchart of an access method according to an example.
FIG. 3 illustrates a flowchart of an access method according to an example.
FIG. 4 illustrates a flowchart of an access method according to an example.
FIG. 5 illustrates a flowchart of an access method according to an example.
FIG. 6 illustrates a flowchart of an access method according to an example.
FIG. 7 illustrates a flowchart of an access method according to an example.
FIG. 8 illustrates a block diagram of an access apparatus according to an example.
FIG. 9 illustrates a block diagram of an access apparatus according to an example.
FIG. 10 illustrates a block diagram of an apparatus for access according to an example.
FIG. 11 illustrates a block diagram of an apparatus for access according to an example.

### DETAILED DESCRIPTION OF THE EMBODIMENTS

Exemplary embodiments will be described in detail here with the examples thereof expressed in the drawings. Where the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects as detailed in the appended claims.

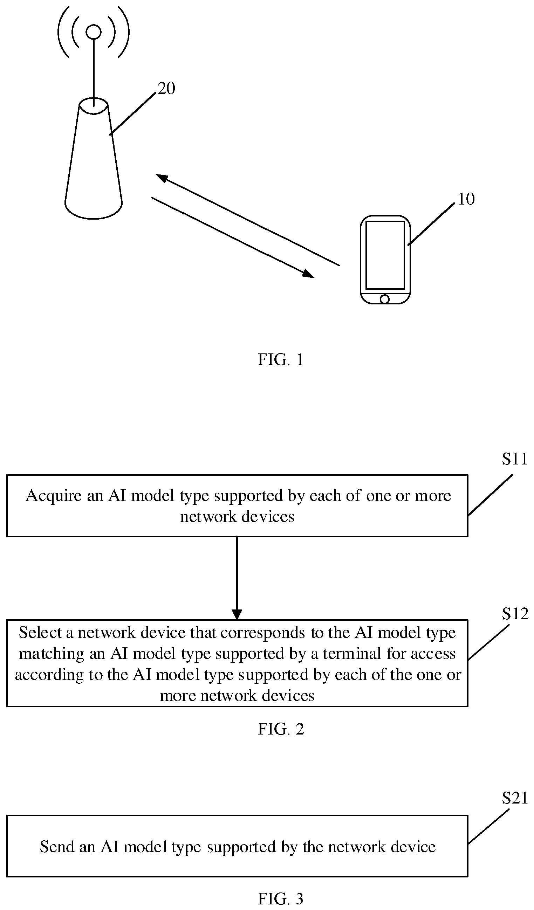

The access methods provided by the examples of the present invention may be applicable to a wireless communication system illustrated in FIG. 1. As illustrated in FIG. 1, the wireless communication system includes a terminal 10 and a network device 20. Information is sent and received between the terminal 10 and the network device 20 through wireless resources.

It should be understood that the wireless communication system illustrated in FIG. 1 is only for schematic illustration. The wireless communication system may also include other network devices, such as a core network device, a wireless relay device and a wireless backhaul device, which are not shown in FIG. 1. Neither the number of the network devices nor the number of the terminals included in the wireless communication system is limited by the examples of the present invention.

It should be further understood that the wireless communication system in the example means a network that provides wireless communication functions. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. According to different factors of the network, such as capacity, speed, and delay, the network may be classified as a 2G (generation) network, a 3G network, a 4G network or a future evolution network, e.g., a 5G network. The 5G network may also be called a new radio (NR) network. For the convenience of description, the wireless communication network is sometimes referred to as a network for short in the invention.

Moreover, the network device involved in the present invention may also be referred to as a wireless access network device. The wireless access network device may include a base station, an evolved node B, a femtocell, an access point (AP) in a wireless fidelity (WiFi) system, a wireless relay node, a wireless backhaul node, a transmission point (TP), or a transmission and reception point (TRP), etc. The wireless access network device may also include a gNB in an NR system, or a component constituting the base station or a part thereof. For a vehicle-to-everything (V2X) communication system, the network device may also include a vehicle-mounted device. It should be understood that the specific technology and specific form adopted by the network device are not limited by the examples of the present invention.

Moreover, the terminal involved in the present invention may also be referred to as a terminal equipment, a user equipment (UE), a mobile station (MS), a mobile terminal (MT), etc. The terminal means a device that provides voice and/or data connectivity for a user, such as a handheld device or a vehicle-mounted device with a wireless connection function. At present, some examples of the terminal include a smart phone, a pocket personal computer (PPC), a handheld computer, a personal digital assistant (PDA), a notebook computer, a tablet computer, a wearable device, or a vehicle-mounted device, etc. For a vehicle-to-everything (V2X) communication system, the terminal device may also include a vehicle-mounted device. It should be understood that the specific technology and specific form adopted by the terminal are not limited by the examples of the present invention.

The terminal and the network device involved in the examples of the present invention both own an AI capability. The terminal with the AI capability can quickly respond to requirements from the user, and quickly display information on processed images, videos, voices, and texts to the user in a low-power and low-cost manner, which is suitable for completing AI inference tasks. The terminal with the AI capability may have an opportunity to intelligently collaborate with a device with the AI capability on a cloud side, so as to achieve more functions and provide the user with a better experience. The device with the AI capability on the cloud side may be used to achieve a data aggregation for multiple terminals, and is suitable for completing AI model training tasks due to its advantages in data throughput, processing speed, etc. Therefore, an AI processing mode based on a cloud-side collaboration is to play an important role in some aspects such as model training and data reasoning.

By applying AI in the wireless communication, the commands from the user are initially processed by a smart chip of the terminal, and then a cloud-side processing result is fed back by a 5G network to the user through interactions in real time between the terminal and a cloud-side device, which can improve a data processing capability and effectively reduce a time delay.

An example provides an access method. In particular, a terminal with the AI capability selects, according to an AI model type supported by each of one or more network devices, a network device that corresponds to the AI model type matching an AI model type supported by the terminal for access, which enables the terminal with the AI capability to select a wireless network matching the AI capability of the terminal itself for access, thereby achieving stronger interconnections and collaborations between the terminal with the AI capability and the network device with the AI capability. Therefore, the terminal with the AI capability can make faster feedback and decisions by utilizing the AI capability of the network device, and a utilizing efficiency of the AI capabilities of the terminal and the network device is improved, which improves communication efficiency.

FIG. 2 illustrates a flowchart of an access method according to an example. As illustrated in FIG. 2, the access method is applicable to a terminal and includes the following steps.

At step S11, an AI model type supported by each of one or more network devices is acquired.

In the example of the present invention, the AI model type supported by each of the one or more network device may include an actual AI model type supported by the network device, and/or an AI training model supported by the network device, and/or an AI inference model type supported by the network device.

At step S12, a network device that corresponds to the AI model type matching an AI model type supported by a terminal is selected for access according to the AI model type supported by each of the one or more network devices.

In the example, after acquiring the AI model type supported by each of the one or more network devices, the terminal selects the AI model type matching the AI model type supported by the terminal according to and from one or more acquired AI model types supported by the network devices, and thereby selects the network device that corresponds to the AI model type matching the AI model type supported by the terminal for access. That is, the terminal selects a wireless network that matches the AI capability of the terminal itself for access, thereby improving an efficiency of utilizing the AI.

In one implementation, the AI model type supported by each of the one or more network devices is configured by the network device and sent to the terminal.

FIG. 3 illustrates a flowchart of an access method according to an example. As illustrated in FIG. 3, the access method is applicable to a network device and includes the following step.

At step S21, an AI model type supported by the network device is sent.

In the example, the network device may predefine the AI model type supported by itself based on the AI capability it supports, such as an actual AI model type it supports, and/or an AI training model supported by the network device, and/or an AI inference model type supported by the network device.

In the example of the present invention, the network device may broadcast the AI model type supported by the network device to a terminal in system information. Alternatively or additionally, the network device may send the AI model type supported by the network device through a unicast signaling to the terminal with the AI capability that is to access the network device. When the network device sends the AI model type it supports through the unicast signaling, a radio resource control reconfiguration (RRCReconfiguration) signaling, for example, may be adopted to send the AI model type supported by the network device to the terminal that is to access the network device.

The network device broadcasts the AI model type supported by the network device in the system information, and thus the terminal that receives the system information broadcast by the network device may acquire the AI model type supported by the network device through the received system information.

In the case that the AI model type supported by the network device is sent through the unicast signaling to the terminal that is to access the network device, the terminal acquires the AI model type supported by the network device through the unicast signaling. In the example of the present invention, for the convenience of description, the unicast signaling for sending the AI model type supported by the network device is referred to as a first unicast signaling.

Moreover, the AI model type supported by the network device in the example of the present invention may include one AI model type or a plurality of AI model types. In order to mark the AI model type supported by the network device, in one implementation, the AI model type supported by the network device may be indicated by an integer value defined in advance, that is, it is negotiated in advance which integer value represents which model type. In other words, the AI model types are represented by the integer values. Different integer values correspond to different AI model types. When the network device sends the AI model type supported by the network device to the terminal, the corresponding integer value is adopted to indicate the AI model type supported by the network device. The terminal receives the integer value sent by the network device, and based on a predefined correspondence between the integer values and the AI model types, the terminal may determine the AI model type supported by the network device.

In one implementation, the AI model type supported by the network device may be indicated by a value of a bit field defined in advance, that is, it is defined in advance that the AI model types are represented by the values of the bit field, and a correspondence between the values of the bit field and the AI model types are negotiated, in which different values of the bit field correspond to different AI model types. As an example, different values of three bits are defined to represent the AI model types supported by the network device. For example, 000 represents AI model type #1 supported by the network device, 001 represents AI model type #2 supported by the network device, and so on. When the network device sends the AI model type supported by the network device to the terminal, the corresponding value of the bit field is adopted to indicate the AI model type supported by the network device. The terminal receives the value of the bit field sent by the network device, and based on the predefined correspondence between the values of the bit field and the AI model types, the terminal may determine the AI model type supported by the network device.

In the example of the present invention, after receiving the AI model type sent by the network device, the terminal selects the network device that matches the AI model type supported by the terminal itself for access.

When determining that there are a plurality of AI model types supported by the terminal itself during selecting the matched AI model type from the AI model types supported by the network device, the terminal may select one of the AI model types it supports based on a service to be performed by the terminal.

It should be understood that, in the example, when the terminal does not determine the AI model type matching the AI model type supported by the terminal itself from the AI model types sent by one or more network devices, a conventional access mode may be adopted, without considering the AI capability of the terminal.

Moreover, in the example of the present invention, in order to further avoid that the terminal cannot find the AI model type supported by the terminal itself from the AI model types sent by the one or more network devices and to ensure that the terminal supporting the AI capability performs the aforementioned communication process, the terminal sends an AI model type supported by the terminal to the one or more network devices. The AI model type supported by the terminal sent by the terminal to the one or more network devices may include an actual AI model type supported by the terminal, and/or an AI training model supported by the terminal, and/or an AI inference model type supported by the terminal.

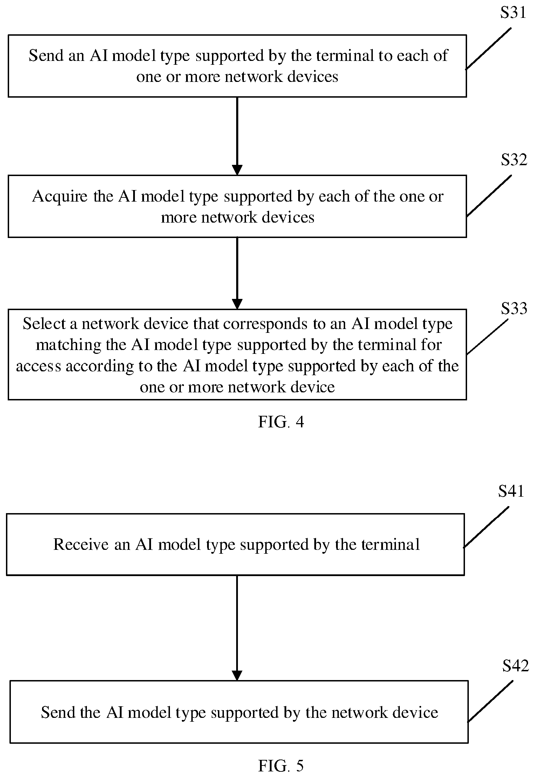

FIG. 4 illustrates a flowchart of an access method according to an example. As illustrated in FIG. 4, the access method is applicable to a terminal and includes the following steps.

At step S31, an AI model type supported by the terminal are sent to each of one or more network devices.

In the example of the present invention, when being sent by the terminal to each of the one or more network devices, the AI model type supported by the terminal may be sent through a unicast signaling. For the convenience of description, the unicast signaling for sending the AI model type supported by the terminal is referred to as a second unicast signaling in the example of the present invention.

When the terminal sends the AI model type supported by the terminal to each of the one or more network devices through the second unicast signaling, the second unicast signaling may be a terminal capability indication signaling or a radio resource control creation completion (RRCSetupComplete) signaling.

Each of the one or more network devices may receive the AI model type supported by the terminal through the second unicast signaling.

Further, after receiving the AI model type supported by the terminal, each of the one or more network devices configures an AI model type that match the AI model type supported by the terminal as the AI model type supported by the network device, so as to ensure that the terminal can select an AI model type matching the AI model type supported by the terminal.

When configuring the AI model type that matches the AI model type supported by the terminal, the network device sends it to the terminal.

At step S32, the AI model type supported by each of the one or more network devices are acquired.

At step S33, a network device that corresponds to an AI model type matching the AI model type supported by the terminal is selected for access according to the AI model type supported by each of the one or more network device.

FIG. 5 illustrates a flowchart of an access method according to an example. As illustrated in FIG. 5, the access method is applicable to a network device and includes the following steps.

At step S41, an AI model type supported by the terminal is received.

In the example, the network device may receive the AI model type supported by the terminal through a second unicast signaling.

Further, after receiving the AI model type supported by the terminal, the network device configures an AI model type that matches the AI model type supported by the terminal as the AI model type supported by the network device, so as to ensure that the terminal can select an AI model type matching the AI model type supported by the terminal.

When configuring the AI model type that matches the AI model type supported by the terminal, the network device sends it to the terminal.

At step S42, the AI model type supported by the network device are sent.

Based on the received AI model type supported by the terminal, the network device configures the AI model type matching the AI model type supported by the terminal as the AI model type supported by the network device.

In another implementation of the exampleof the present invention, when being to access a network device, the terminal with the AI capability may send to each of one or more network devices AI capability information that the terminal has a capability of supporting one or more AI models. For example, the terminal with the AI capability sends to the network device the AI capability information indicating that the terminal supports an AI model and/or an AI training model and/or an AI inference model type supported by the terminal. When the network device wants to know the AI model and/or the AI training model and/or the AI inference model specifically supported by the terminal with the AI capability, the network device sends a request signaling to the terminal with the AI capability. The request signaling is configured to request to acquire the AI model type supported by the terminal. The request signaling may include a terminal information request (UEInformationRequest) signaling. After receiving the request signaling, the terminal with the AI capability informs the network device of the specific information on the AI model and/or the AI training model and/or the AI inference model it supports. That is, the terminal with the AI capability sends, through a notification signaling, the AI model type supported by the terminal to the network device. The notification signaling is configured to indicate the AI model type supported by the terminal. The notification signaling may include a terminal information response (UEInformationResponse) signaling.

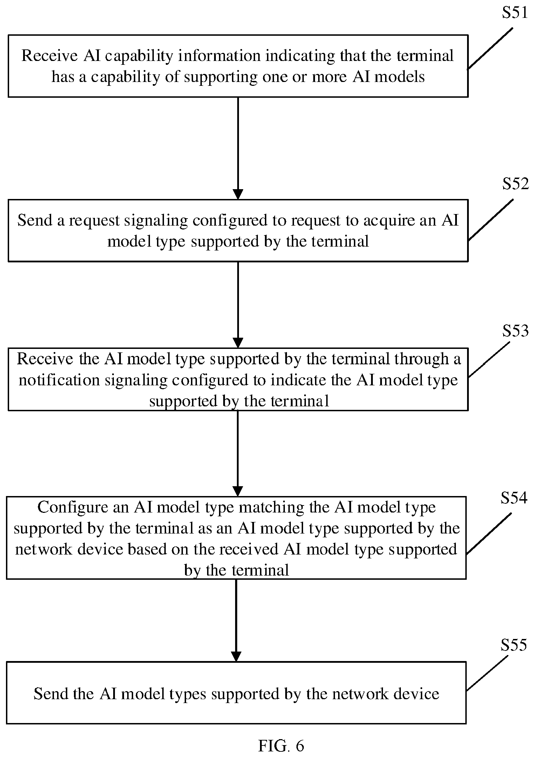

FIG. 6 illustrates a flowchart of an access method according to an example. As illustrated in FIG. 6, the access method is applicable to a network device and includes the following steps.

At step S51, AI capability information is received. The AI capability information indicates that the terminal has a capability of supporting one or more AI models.

At step S52, a request signaling is sent. The request signaling is configured to request to acquire an AI model type supported by the terminal.

At step S53, the AI model type supported by the terminal is received through a notification signaling. The notification signaling is configured to indicate the AI model type supported by the terminal.

At step S54, an AI model type matching the AI model type supported by the terminal is configured as an AI model type supported by the network device based on the received AI model type supported by the terminal.

At step S55, the AI model types supported by the network device are sent.

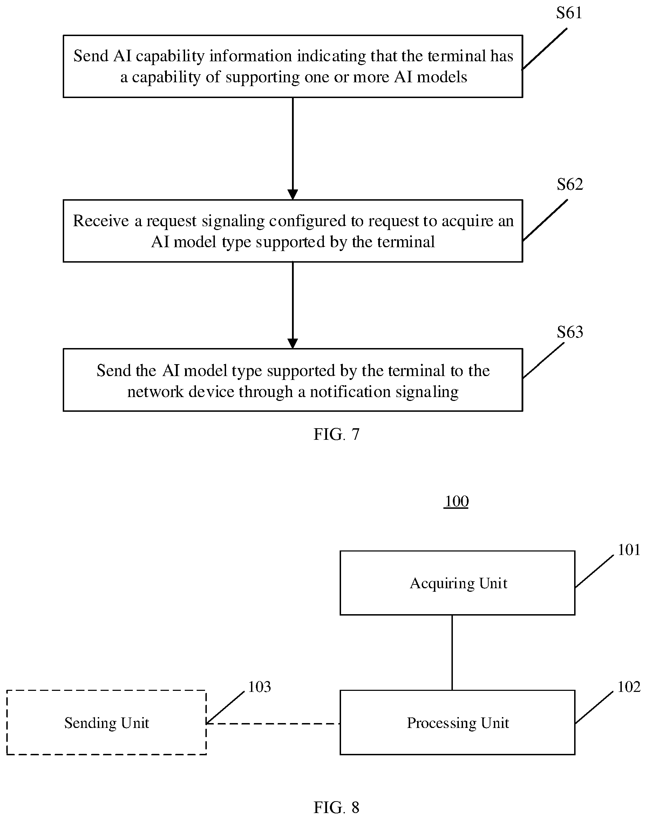

FIG. 7 illustrates a flowchart of an access method according to an example. As illustrated in FIG. 7, the access method is applicable to a terminal and includes the following steps.

At step S61, AI capability information is sent. The AI capability information indicates that the terminal has a capability of supporting one or more AI models.

At step S62, a request signaling is received. The request signaling is configured to request to acquire an AI model type supported by the terminal.

In response to determining that the request signaling sent by a network device is received, the terminal sent an AI model type supported by the terminal to the network device. When receiving the request signaling sent by the network device, the terminal sent the AI model type supported by the terminal.

At step S63, the AI model type supported by the terminal is sent to the network device through a notification signaling.

The terminal may send the AI model type supported by the terminal to the network device through the notification signaling. The notification signaling is configured to indicate the AI model type supported by the terminal.

According to the access methods provided by the examples of the present invention, each of one or more network devices with the AI capability configures and sends the AI model type it supports, the terminal with the AI capability acquires the AI model type supported by each of the one or more network devices, and selects a network device that corresponds to the AI model type matching an AI model type supported by the terminal based on the AI model types supported by the one or more network devices for access, which enables the terminal with the AI capability to select a wireless network matching the AI capability of the terminal for access, thereby improving a utilizing efficiency of the AI capabilities of the terminal and the network device.

The access methods provided in the examples of the present invention are applicable to an interaction process between the terminal and the network device. The interaction process between the terminal and the network device for achieving the access based on the AI model type may make reference with the relevant description of the above examples and is not repeated here.

An example of the present invention also provides an access apparatus based on the same conception.

It should be understood that the access apparatus provided by the example of the present invention includes corresponding hardware structures and/or corresponding software modules for performing various functions, so as to implement the above functions. By combining with units and algorithm steps disclosed in the example of the present invention, the example of the present invention may be implemented in hardware or in a combination form of hardware and computer software. Whether to perform a certain function in hardware or in a way of software-driven hardware is dependent on specific applications of a technical solution and design constraints. Those skilled in the art may adopt different approaches to implement the described functions for each specific application, which should not be considered beyond the scope of the technical solution of the example of the present invention.

FIG. 8 illustrates a block diagram of an access apparatus according to an example. As illustrated in FIG. 8, the access apparatus 100 includes an acquiring unit 101 and a processing unit 102.

The acquiring unit 101 is configured to acquire an AI model type supported by each of one or more network devices. The processing unit 102 is configured to select, according to one or more acquired AI model types, a network device that corresponds to the AI model type matching an AI model type supported by a terminal for access.

Alternatively or additionally, the acquiring unit 101 acquires the AI model type supported by each of the one or more network devices through system information broadcast by the network device.

Alternatively or additionally, the acquiring unit 101 acquires the AI model type supported by each of the one or more network devices through a first unicast signaling

Alternatively or additionally, the first unicast signaling includes a radio resource control reconfiguration signaling.

Alternatively or additionally, the AI model type is represented by an integer value, where different integer values correspond to different AI model types.

Alternatively or additionally, the AI model type is represented by a value of a bit field, where different values of the bit field correspond to different AI model types.

Alternatively or additionally, the access apparatus 100 further includes a sending unit 103. The sending unit 103 is configured to send the AI model type supported by the terminal to each of the one or more network devices.

Alternatively or additionally, the sending unit 103 sends the AI model type supported by the terminal to each of the one or more network devices through a second unicast signaling.

Alternatively or additionally, the second unicast signaling includes a terminal capability indication signaling or a radio resource control creation completion signaling.

Alternatively or additionally, the acquiring unit 101 is further configured to:
determine, before the sending unit 103 sends the AI model type supported by the terminal to each of the one or more network devices, that a request signaling sent by the network device is received. The request signaling is configured to request to acquire the AI model type supported by the terminal.

Alternatively or additionally, the acquiring unit 101 is further configured to:
send, through a notification signaling, the AI model type supported by the terminal to each of the one or more network devices. The notification signaling is configured to indicate the AI model type supported by the terminal.

Alternatively or additionally, the request signaling includes a terminal information request signaling, and the notification signaling includes a terminal information response signaling.

Alternatively or additionally, the sending unit 103 is further configured to send AI capability information to each of the one or more network devices. The AI capability information indicates that the terminal has a capability of supporting one or more AI models.

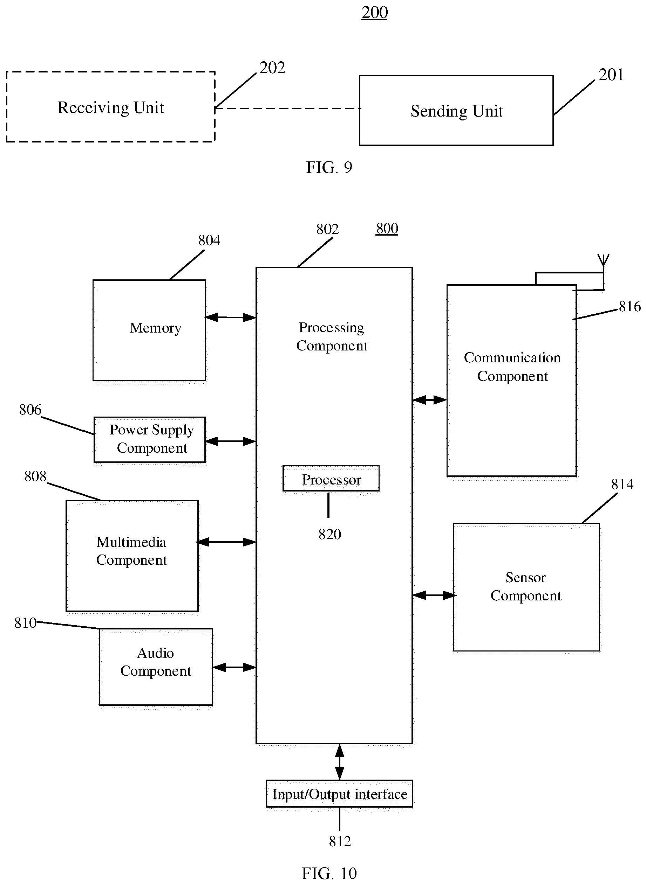

FIG. 9 illustrates a block diagram of an access apparatus according to an example. As illustrated in FIG. 9, the access apparatus 200 includes a sending unit 201.

The sending unit 201 is configured to send an AI model type supported by a network device.

Alternatively or additionally, the sending unit 201 broadcasts, in system information, the AI model type supported by the network device.

Alternatively or additionally, the sent unit 201 sends, through a first unicast signaling, the AI model type supported by the network device.

Alternatively or additionally, the first unicast signaling includes a radio resource control reconfiguration signaling.

Alternatively or additionally, the AI model type is represented by an integer value. Different integer values correspond to different AI model types.

Alternatively or additionally, the AI model type is represented by a value of a bit field. Different values of the bit field correspond to different AI model types.

Alternatively or additionally, the access apparatus 200 further includes a receiving unit 202. The receiving unit 202 is configured to receive an AI model type supported by a terminal.

Alternatively or additionally, the receiving unit 202 receives, through a second unicast signaling, the AI model type supported by the terminal.

Alternatively or additionally, the second unicast signaling includes a terminal capability indication signaling or a radio resource control creation completion signaling.

Alternatively or additionally, the sending unit 201 is further configured to send a request signaling before the receiving unit 202 receives the AI model type supported by the terminal. The request signaling is configured to request to acquire the AI model type supported by the terminal.

Alternatively or additionally, the receiving unit 202 receives, through a notification signaling, the AI model type supported by the terminal. The notification signaling is configured to indicate the AI model type supported by the terminal.

Alternatively or additionally, the request signaling includes a terminal information request signaling, and the notification signaling includes a terminal information response signaling.

Alternatively or additionally, the receiving unit 202 is further configured to receive AI capability information. The AI capability information indicates that the terminal has a capability of supporting one or more AI models.

Alternatively or additionally, the sending unit 201 is further configured to configure an AI model type that matches the AI model type supported by the terminal as the AI model type supported by the network device.

Regarding the apparatuses in the above examples, the specific ways in which each module performs its operations have been described in detail in the related method examples, and will not be repeated here.

FIG. 10 illustrates a block diagram of an apparatus 800 for access according to an example. For example, the apparatus 800 may be a mobile phone, a computer, a digital broadcasting terminal, a messaging device, a game console, a tablet device, a medical device, a fitness device, a personal digital assistant, and the like.

As illustrated in FIG. 10, the apparatus 800 includes one or more the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the apparatus 800, such as operations associated with display, phone calls, data communications, camera operations, and recording operations. The processing component 802 includes one or more processors 820 to execute instructions to complete all or part of the steps of the above methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the apparatus 800. Examples of such data include instructions for any application or method operated on the apparatus 800, contact data, phonebook data, messages, pictures, videos, and the like. The memory 804 may be implemented by any type of volatile or non-volatile storage device or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, disk or optical disk.

The power supply component 806 provides power to various components of the apparatus 800. The power supply component 806 may include a power management system, one or more power supplies, and other components associated with generating, managing, and distributing power for the apparatus 800.

The multimedia component 808 includes a screen providing an output interface between the apparatus 800 and a user. In some examples, the screen may include a liquid crystal display (LCD) and a touch panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a lasting time and a pressure associated with the touch or swipe. In some examples, the multimedia component 808 includes a front camera and/or a rear camera. The front camera and/or rear camera may receive external multimedia data when the apparatus 800 is in an operating mode, such as a photographing mode or a video mode. Each front camera and rear camera may be a fixed optical lens system or have focal length and optical zooming capability.

The audio component 810 is configured to output and/or input an audio signal. For example, the audio component 810 includes a microphone (MIC) that is configured to receive an external audio signal when the apparatus 800 is in an operating mode, such as a call mode, a recording mode, and a voice recognition mode. The received audio signal may be further stored in the memory 804 or transmitted via the communication component 816. In some examples, the audio component 810 also includes a speaker for outputting an audio signal.

The I/O interface 812 provides an interface between the processing component 802 and a peripheral interface module. The above peripheral interface module may be a keyboard, a click wheel, buttons, or the like. These buttons may include but not limited to a home button, a volume button, a start button and a lock button.

The sensor component 814 includes one or more sensors to provide the apparatus 800 with status assessments in various aspects. For example, the sensor component 814 may detect an open/closed state of the apparatus 800 and a relative positioning of components such as the display and keypad of the apparatus 800, and the sensor component 814 may also detect a change in position of the apparatus 800 or a component of the apparatus 800, the presence or absence of user contact with the apparatus 800, orientation or acceleration/deceleration of the apparatus 800, and temperature change of the apparatus 800. The sensor component 814 may include a proximity sensor configured to detect the presence of a nearby object without any physical contact. The sensor component 814 may further include an optical sensor, such as a Complementary Metal-Oxide-Semiconductor (CMOS) or Charged Coupled Device (CCD) image sensor which is used in imaging applications. In some examples, the sensor component 814 may also include an acceleration sensor, a gyro sensor, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as Wi-Fi, 2G, 3G, 4G, 5G or a combination thereof. In an example, the communication component 816 receives broadcast signals or broadcast related information from an external broadcast management system via a broadcast channel. In an example, the communication component 816 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements for performing the above methods.

In one or more examples, there is also provided a non-transitory computer-readable storage medium including instructions, such as the memory 804 including instructions. The above instructions may be executed by the one or more processors 820 of the apparatus 800 to complete the above methods. For example, the non-transitory computer-readable storage medium may be a read-only memory (ROM), a random access memory (RAM), a CD-ROM, a magnetic tape, a floppy disk, an optical data storage device, and the like.

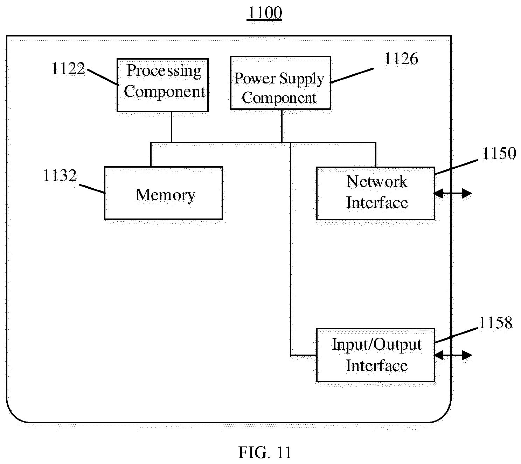

FIG. 11 illustrates a block diagram of an apparatus 1100 for access according to an example. For example, the apparatus 1100 may be provided as a network device, such as a base station. As illustrated in FIG. 11, the apparatus 1100 includes a processing component 1122 which further includes one or more processors, and a memory resource represented by a memory 1132 which is used to store instructions that may be executed by the processing component 1122, such as application programs. The application programs stored in the memory 1132 may include one or more modules, each of which corresponds to a set of instructions. In addition, the processing component 1122 is configured to execute instructions to perform the above methods.

The apparatus 1100 may also include a power supply component 1126 configured to perform power management for the apparatus 1100, a wired or wireless network interface 1150 configured to connect the apparatus 1100 to a network, and an input/output (I/O) interface 1158. The apparatus 1100 may operate based on an operating system stored in the memory 1132, such as Windows Server^{™}, Mac OS X^{™}, Unix^{™}, Linux^{™}, FreeBSD^{™} or the like.

In one or more examples, there is also provided a non-transitory computer-readable storage medium including instructions, such as the memory 1132 including instructions. The above instructions may be executed by the processing component 1122 of the apparatus 1100 to complete the above methods. For example, the non-transitory computer-readable storage medium may be a read-only memory (ROM), a random access memory (RAM), a CD-ROM, a magnetic tape, a floppy disk, an optical data storage device, and the like.

It should be further understood that the term "plurality" in the present invention refers to two or above, and other quantifiers are similar. The term "and/or" describes the association relationships between associated objects, indicating that there may be three types of relationships. For example, A and/or B means that A exists alone, A and B exist at the same time, and B exists alone. The character "/" generally indicates that the associated objects before and after are in an "or" relationship. The singular forms "a", "said" and "the" are also intended to include plurality, unless clearly indicated otherwise in the context.

It should be further understood that the terms "first", "second", etc. are used to describe various information, but such information should not be limited to these terms. These terms are only used to distinguish information of the same category with each other, without indicating a specific order or an importance. In fact, the expressions such as "first" and "second" may be used interchangeably. For example, without departing from the scope of the present invention, first information may be referred as second information; and similarly, second information may also be referred as first information.

It should be further understood that although being described in a specific order in the drawings, the operations in the examples of the present invention should not be understood as requiring these operations to be performed in the specific order or in a serial order as shown, or requiring the operations to be completely performed as shown to get a desired result. In certain circumstances, multitasking and parallel processing may be advantageous.

Other implementations of the present invention will be readily apparent to those skilled in the art after implementing the invention by referring to the specification. The present invention is intended to cover any variations, uses, or adaptations of the present invention that are in accordance with the general principles thereof and include common general knowledge or conventional technical means in the art that are not disclosed in the present invention. The specification and examples therein are only illustrative, and the scope of the present invention is to be indicated by appended claims.

It should be understood that the present invention is not limited to the above-described accurate structures illustrated in the drawings, and various modifications and changes can be made to the present invention without departing from the scope thereof. The scope of the present invention is to be limited only by the appended claims.

## Claims

1. An access method, performed by a terminal, comprising:
sending (S31) a second AI model type supported by the terminal to each of one or more network devices, wherein the one or more network devices are wireless access network devices and wherein the second AI model type supported by the terminal is used for the network device to configure an AI model type that matches the second AI model type supported by the terminal as a first AI model type supported by the network device;
acquiring (S11) the first AI model type supported by each of the one or more network devices; and
selecting (S12), according to the first AI model type supported by each of the one or more network devices, a network device that corresponds to the first AI model type matching the second AI model type supported by the terminal for access.

2. The access method according to claim 1, wherein acquiring (S11) the first AI model type supported by each of the one or more network devices comprises at least one of:
acquiring the first AI model type supported by each of the one or more network devices through system information broadcast by the network device; or
acquiring the first AI model type supported by each of the one or more network devices through a first unicast signaling;
wherein preferably, the first unicast signaling comprises a radio resource control reconfiguration signaling.

3. The access method according to claim 1 or 2,
wherein the first AI model type is represented by an integer value, wherein different integer values correspond to different first AI model types; or
wherein the first AI model type is represented by a value of a bit field, wherein different values of the bit field correspond to different first AI model types.

4. The access method according to claim 1, wherein sending (S31) the second AI model type supported by the terminal to each of the one or more network devices comprises:
sending the second AI model type supported by the terminal to each of the one or more network devices through a second unicast signaling;
wherein the second unicast signaling comprises a terminal capability indication signaling or a radio resource control creation completion signaling.

5. The access method according to claim 1, further comprising:
determining (S62), before sending (S31) the second AI model type supported by the terminal to each of the one or more network devices, that a terminal information request signaling sent by the network device is received, wherein the terminal information request signaling is configured to request to acquire the second AI model type supported by the terminal;
wherein sending (S31) the second AI model type supported by the terminal to each of the one or more network devices comprises:
sending (S63), through a terminal information response signaling, the second AI model type supported by the terminal to each of the one or more network devices, wherein the terminal information response signaling is configured to indicate the second AI model type supported by the terminal.

6. The access method according to any one of the preceding claims 1 to 5, further comprising:
sending (S61) AI capability information to each of the one or more network devices, wherein the AI capability information indicates that the terminal has a capability of supporting one or more AI models.

7. An access method, performed by a network device, comprising:
receiving (S41) a second AI model type supported by a terminal;
configuring an AI model type that matches the second AI model type supported by the terminal as a first AI model type supported by the network device;
sending (S21) a first AI model type supported by the network device,
wherein the network device is a wireless access network device.

8. The access method according to claim 7, wherein sending (S21) the first AI model type supported by the network device comprises at least one of:
broadcasting, in system information, the first AI model type supported by the network device; or
sending, through a first unicast signaling, the first AI model type supported by the network device;
wherein preferably, the first unicast signaling comprises a radio resource control reconfiguration signaling.

9. The access method according to claim 7 or 8,
wherein the first AI model type is represented by an integer value, wherein different integer values correspond to different first AI model types; or
wherein the first AI model type is represented by a value of a bit field, wherein different values of the bit field correspond to different first AI model types.

10. The access method according to claim 7, wherein receiving (S41) the second AI model type supported by the terminal comprises:
receiving, through a second unicast signaling, the second AI model type supported by the terminal;
wherein the second unicast signaling comprises a terminal capability indication signaling or a radio resource control creation completion signaling.

11. The access method according to claim 7, further comprising:
sending (S52) a terminal information request signaling before receiving (S41) the second AI model type supported by the terminal, wherein the terminal information request signaling is configured to request to acquire the second AI model type supported by the terminal;
wherein receiving (S41) the second AI model type supported by the terminal comprises:
receiving (S53), through a terminal information response signaling, the second AI model type supported by the terminal, wherein the terminal information response signaling is configured to indicate the second AI model type supported by the terminal.

12. The access method according to any one of the preceding claims 7 to 11, further comprising:
receiving (S51) AI capability information, wherein the AI capability information indicates that the terminal has a capability of supporting one or more AI models.

13. A terminal, comprising:
one or more processors; and
a memory for storing instructions executable by the one or more processors;
wherein the one or more processors are configured to perform the access method according to any one of the preceding claims 1 to 6.

14. A wireless access network device, comprising:
one or more processors; and
a memory for storing instructions executable by the one or more processors;
wherein the one or more processors are configured to perform the access method according to any one of the preceding claims 7 to 12.

## Patentansprüche

1. Zugangsverfahren, das von einem Endgerät durchgeführt wird, umfassend:
Senden (S31) eines vom Endgerät unterstützten zweiten KI-Modelltyps an jede der einen oder mehreren Netzwerkvorrichtungen, wobei es sich bei der einen oder den mehreren Netzwerkvorrichtungen um drahtlose Zugangsnetzwerkvorrichtungen handelt, und wobei der vom Endgerät unterstützte zweite KI-Modelltyp verwendet wird, damit die Netzwerkvorrichtung einen KI-Modelltyp, der mit dem vom Endgerät unterstützten zweiten KI-Modelltyp übereinstimmt, als einen von der Netzwerkvorrichtung unterstützten ersten KI-Modelltyp konfiguriert;
Erfassen (S11) des ersten KI-Modelltyps, der von jeder der einen oder mehreren Netzwerkvorrichtungen unterstützt wird; und
Auswählen (S12) einer Netzwerkvorrichtung, die dem ersten KI-Modelltyp entspricht, der mit dem vom Endgerät unterstützten zweiten KI-Modelltyp übereinstimmt, entsprechend dem ersten KI-Modelltyp, der von jedem der einen oder mehreren Netzwerkvorrichtungen unterstützt wird, um einen Zugang zu ermöglichen.

2. Zugangsverfahren nach Anspruch 1, wobei das Erfassen (S11) des ersten KI-Modelltyps, der von jeder der einen oder mehreren Netzwerkvorrichtungen unterstützt wird, mindestens eines aus Folgendem umfasst:
Erfassen des ersten KI-Modelltyps, der von jeder der einen oder mehreren Netzwerkvorrichtungen unterstützt wird, anhand von Systeminformationen, die von der Netzwerkvorrichtung ausgestrahlt werden; oder
Erfassen des ersten KI-Modelltyps, der von jeder der einen oder mehreren Netzwerkvorrichtungen unterstützt wird, anhand einer ersten Unicast-Signalisierung;
wobei die erste Unicast-Signalisierung vorzugsweise eine Radio-Resource-Control-Neukonfigurationssignalisierung aufweist.

3. Zugangsverfahren nach Anspruch 1 oder 2,
wobei der erste KI-Modelltyp durch einen ganzzahligen Wert dargestellt wird, wobei verschiedene ganzzahlige Werte verschiedenen ersten KI-Modelltypen entsprechen; oder
wobei der erste KI-Modelltyp durch einen Wert eines Bitfelds dargestellt wird, wobei unterschiedliche Werte des Bitfelds unterschiedlichen ersten KI-Modelltypen entsprechen.

4. Zugangsverfahren nach Anspruch 1, wobei das Senden (S31) des vom Endngerät unterstützten zweiten KI-Modelltyps an jede der einen oder mehreren Netzwerkvorrichtungen umfasst:
Senden des vom Endgerät unterstützten zweiten KI-Modelltyps an jede der einen oder mehreren Netzwerkvorrichtungen anhand einer zweiten Unicast-Signalisierung;
wobei die zweite Unicast-Signalisierung eine Signalisierung zur Angabe der Endgerätfähigkeit oder eine Signalisierung zum Abschluss der Einrichtung der Radio Resource Control aufweist.

5. Zugangsverfahren nach Anspruch 1, das ferner umfasst:
Bestimmen (S62), vor dem Senden (S31) des vom Endgerät unterstützten zweiten KI-Modelltyps an jede der einen oder mehreren Netzwerkvorrichtungen, dass eine von der Netzwerkvorrichtung gesendete Signalisierung zur Anforderung von Endgerätinformationen empfangen wird, wobei die Signalisierung zur Anforderung von Endgerätinformationen so ausgelegt ist, dass sie die Erfassung des vom Endgerät unterstützten zweiten KI-Modelltyps anfordert;
wobei das Senden (S31) des vom Endgerät unterstützten zweiten KI-Modelltyps an jede der einen oder mehreren Netzwerkvorrichtungen umfasst:
Senden (S63) des vom Endgerät unterstützten zweiten KI-Modelltyps über eine Signalisierung zur Antwort auf Endgerätinformationen an jede der einen oder mehreren Netzwerkvorrichtungen, wobei die Signalisierung zur Antwort auf Endgerätinformationen so ausgelegt ist, dass sie den vom Endgerät unterstützten zweiten KI-Modelltyp angibt.

6. Zugangsverfahren nach einem der vorstehenden Ansprüche 1 bis 5, das ferner umfasst:
Senden (S61) von Informationen über die KI-Fähigkeiten an jede der einen oder mehreren Netzwerkvorrichtungen, wobei die Informationen über die KI-Fähigkeiten angeben, dass das Endgerät dazu fähig ist, ein oder mehrere KI-Modelle zu unterstützen.

7. Zugangsverfahren, das von einer Netzwerkvorrichtung durchgeführt wird, umfassend:
Empfangen (S41) eines von einem Endgerät unterstützten zweiten KI-Modelltyps;
Konfigurieren eines KI-Modelltyps, der mit dem vom Endgerät unterstützten zweiten KI-Modelltyp übereinstimmt, als von der Netzwerkvorrichtung unterstützten ersten KI-Modelltyp;
Senden (S21) eines von der Netzwerkvorrichtung unterstützten ersten KI-Modelltyps,
wobei es sich bei der Netzwerkvorrichtung um ein drahtloses Zugangsnetzwerkvorrichtung handelt.

8. Zugangsverfahren nach Anspruch 7, wobei das Senden (S21) des von der Netzwerkvorrichtung unterstützten ersten KI-Modelltyps mindestens eines aus Folgendem umfasst:
Ausstrahlen des von der Netzwerkvorrichtung unterstützten ersten KI-Modelltyps in den Systeminformationen; oder
Senden, über eine erste Unicast-Signalisierung, des von der Netzwerkvorrichtung unterstützten ersten KI-Modelltyps,
wobei die erste Unicast-Signalisierung vorzugsweise eine Radio-Resource-Control-Neukonfigurationssignalisierung aufweist.

9. Zugangsverfahren nach Anspruch 7 oder 8,
wobei der erste KI-Modelltyp durch einen ganzzahligen Wert dargestellt wird, wobei verschiedene ganzzahlige Werte verschiedenen ersten KI-Modelltypen entsprechen; oder
wobei der erste KI-Modelltyp durch einen Wert eines Bitfelds dargestellt wird, wobei unterschiedliche Werte des Bitfelds unterschiedlichen ersten KI-Modelltypen entsprechen.

10. Zugangsverfahren nach Anspruch 7, wobei das Empfangen (S41) des vom Endgerät unterstützten zweiten KI-Modelltyps umfasst:
Empfangen, anhand einer zweiten Unicast-Signalisierung, des von dem Endgerät unterstützten zweiten KI-Modelltyps;
wobei die zweite Unicast-Signalisierung eine Signalisierung zur Angabe der Endgerätfähigkeit oder eine Signalisierung zum Abschluss der Einrichtung der Radio Resource Control aufweist.

11. Zugangsverfahren nach Anspruch 7, das ferner umfasst:
Senden (S52) einer Signalisierung zur Anforderung von Endgeräteinformationen vor dem Empfangen (S41) des vom Endgerät unterstützten zweiten KI-Modelltyps, wobei die Signalisierung zur Anforderung von Endgeräteinformationen so ausgelegt ist, dass sie das Erfassen des vom Endgerät unterstützten zweiten KI-Modelltyps anfordert;
wobei das Empfangen (S41) des vom Endgerät unterstützten zweiten KI-Modelltyps umfasst:
Empfangen (S53) des vom Endgerät unterstützten zweiten KI-Modelltyps über eine Signalisierung zur Antwort auf Endgerätinformationen, wobei die Signalisierung zur Antwort auf Endgerätinformationen so ausgelegt ist, dass sie den vom Endgerät unterstützten zweiten KI-Modelltyp angibt.

12. Zugangsverfahren nach einem der vorstehenden Ansprüche 7 bis 11, das ferner umfasst:
Empfangen (S51) von Informationen über die KI-Fähigkeiten, wobei die Informationen über die KI-Fähigkeiten angeben, dass das Endgerät dazu fähig ist, ein oder mehrere KI-Modelle zu unterstützen.

13. Endgerät, das aufweist:
einen oder mehrere Prozessoren; und
einen Speicher zum Speichern von Anweisungen, die von dem einen oder den mehreren Prozessoren ausgeführt werden können;
wobei der eine oder die mehreren Prozessoren so ausgebildet sind, dass sie das Zugangsverfahren nach einem der vorstehenden Ansprüche 1 bis 6 ausführen.

14. Drahtlose Zugangsnetzwerkvorrichtung, die aufweist:
einen oder mehrere Prozessoren; und
einen Speicher zum Speichern von Anweisungen, die von dem einen oder mehreren Prozessoren ausgeführt werden können;
wobei der eine oder die mehreren Prozessoren so ausgebildet sind, dass sie das Zugangsverfahren nach einem der vorstehenden Ansprüche 7 bis 12 ausführen.

## Revendications

1. Procédé d'accès, mis en œuvre par un terminal, comprenant les étapes consistant à :
envoyer (S31) un second type de modèle d'IA pris en charge par le terminal à chacun d'un ou de plusieurs dispositifs de réseau, dans lequel le ou les dispositifs de réseau sont des dispositifs de réseau d'accès sans fil et dans lequel le second type de modèle d'IA pris en charge par le terminal est utilisé par le dispositif de réseau pour configurer un type de modèle d'IA qui correspond au second type de modèle d'IA pris en charge par le terminal en tant que premier type de modèle d'IA pris en charge par le dispositif de réseau ;
acquérir (S11) le premier type de modèle d'IA pris en charge par chacun du ou des dispositifs de réseau ; et
sélectionner (S12), conformément au premier type de modèle d'IA pris en charge par chacun du ou des dispositifs de réseau, un dispositif de réseau qui correspond au premier type de modèle d'IA correspondant au second type de modèle d'IA pris en charge par le terminal à des fins d'accès.

2. Procédé d'accès selon la revendication 1, dans lequel l'étape d'acquisition (S11) du premier type de modèle d'IA pris en charge par chacun du ou des dispositifs de réseau consiste au moins à :
acquérir le premier type de modèle d'IA pris en charge par chacun du ou des dispositifs de réseau par l'intermédiaire d'une diffusion d'informations de système par le dispositif de réseau ; ou
acquérir le premier type de modèle d'IA pris en charge par chacun du ou des dispositifs de réseau par l'intermédiaire d'une première signalisation de monodiffusion ;
dans lequel, de préférence, la première signalisation de monodiffusion comprend une signalisation de reconfiguration de commande de ressources radio.

3. Procédé d'accès selon la revendication 1 ou la revendication 2,
dans lequel le premier type de modèle d'IA est représenté par une valeur entière, dans lequel des valeurs entières différentes correspondent à des premiers types de modèle d'IA différents ; ou
dans lequel le premier type de modèle d'IA est représenté par une valeur d'un champ de bits, dans lequel des valeurs différentes du champ de bits correspondent à des premiers types de modèle d'IA différents.

4. Procédé d'accès selon la revendication 1, dans lequel l'étape d'envoi (S31) du second type de modèle d'IA pris en charge par le terminal à chacun du ou des dispositifs de réseau consiste à :
envoyer le second type de modèle d'IA pris en charge par le terminal à chacun du ou des dispositifs de réseau par l'intermédiaire d'une seconde signalisation de monodiffusion ;
dans lequel la seconde signalisation de monodiffusion comprend une signalisation d'indication de capacité de terminal ou une signalisation d'exécution de création de commande de ressources radio.

5. Procédé d'accès selon la revendication 1, comprenant en outre l'étape consistant à :
déterminer (S62), avant l'étape d'envoi (S31) du second type de modèle d'IA pris en charge par le terminal à chacun du ou des dispositifs de réseau, qu'une signalisation de demande d'informations de terminal envoyée par le dispositif de réseau a été reçue, dans lequel la signalisation de demande d'informations de terminal est configurée pour demander d'acquérir le second type de modèle d'IA pris en charge par le terminal ;
dans lequel l'étape d'envoi (S31) du second type de modèle d'IA pris en charge par le terminal à chacun du ou des dispositifs de réseau comprend l'étape consistant à :
envoyer (S63), par l'intermédiaire d'une signalisation de réponse d'informations de terminal, le second type de modèle d'IA pris en charge par le terminal à chacun du ou des dispositifs de réseau, dans lequel la signalisation de réponse d'informations de terminal est configurée pour indiquer le second type de modèle d'IA pris en charge par le terminal.

6. Procédé d'accès selon l'une quelconque des revendications précédentes 1 à 5, comprenant en outre l'étape consistant à :
envoyer (S61) des informations de capacité d'IA à chacun du ou des dispositifs de réseau, dans lequel les informations de capacité d'IA indiquent que le terminal a une capacité de prise en charge d'un ou de plusieurs modèles d'IA.

7. Procédé d'accès, mis en œuvre par un dispositif de réseau, comprenant les étapes consistant à :
recevoir (S41) un second type de modèle d'IA pris en charge par un terminal ;
configurer un type de modèle d'IA qui correspond au second type de modèle d'IA pris en charge par le terminal en tant que premier type de modèle d'IA pris en charge par le dispositif de réseau ;
envoyer (S21) un premier type de modèle d'IA pris en charge par le dispositif de réseau,
dans lequel le dispositif de réseau est un dispositif de réseau d'accès sans fil.

8. Procédé d'accès selon la revendication 7, dans lequel l'étape d'envoi (S21) du premier type de modèle d'IA pris en charge par le dispositif de réseau consiste au moins à :
diffuser, dans des informations de système, le premier type de modèle d'IA pris en charge par le dispositif de réseau ; ou
envoyer, par l'intermédiaire d'une première signalisation de monodiffusion, le premier type de modèle d'IA pris en charge par le dispositif de réseau ;
dans lequel, de préférence, la première signalisation de monodiffusion comprend une signalisation de reconfiguration de commande de ressources radio.

9. Procédé d'accès selon la revendication 7 ou la revendication 8,
dans lequel le premier type de modèle d'IA est représenté par une valeur entière, dans lequel des valeurs entières différentes correspondent à des premiers types de modèle d'IA différents ; ou
dans lequel le premier type de modèle d'IA est représenté par une valeur d'un champ de bits, dans lequel des valeurs différentes du champ de bits correspondent à des premiers types de modèle d'IA différents.

10. Procédé d'accès selon la revendication 7, dans lequel l'étape de réception (S41) du second type de modèle d'IA pris en charge par le terminal consiste à :
recevoir, par l'intermédiaire d'une seconde signalisation de monodiffusion, le second type de modèle d'IA pris en charge par le terminal ;
dans lequel la seconde signalisation de monodiffusion comprend une signalisation d'indication de capacité de terminal ou une signalisation d'exécution de création de commande de ressources radio.

11. Procédé d'accès selon la revendication 7, comprenant en outre l'étape consistant à :
envoyer (S52) une signalisation de demande d'informations de terminal avant l'étape de réception (S41) du second type de modèle d'IA pris en charge par le terminal, dans lequel la signalisation de demande d'informations de terminal est configurée pour demander d'acquérir le second type de modèle d'IA pris en charge par le terminal ;
dans lequel l'étape de réception (S41) du second type de modèle d'IA pris en charge par le terminal comprend l'étape consistant à :
recevoir (S53), par l'intermédiaire d'une signalisation de réponse d'informations de terminal, le second type de modèle d'IA pris en charge par le terminal, dans lequel la signalisation de réponse d'informations de terminal est configurée pour indiquer le second type de modèle d'IA pris en charge par le terminal.

12. Procédé d'accès selon l'une quelconque des revendications précédentes 7 à 11, comprenant en outre l'étape consistant à :
recevoir (S51) des informations de capacité d'IA, dans lequel les informations de capacité d'IA indiquent que le terminal a une capacité de prise en charge d'un ou de plusieurs modèles d'IA.

13. Terminal, comprenant :
un ou plusieurs processeurs ; et
une mémoire destinée à maintenir des instructions exécutables par le ou les processeurs ;
dans lequel le ou les processeurs sont configurés pour mettre en œuvre le procédé d'accès selon l'une quelconque des revendications précédentes 1 à 6.

14. Dispositif de réseau d'accès sans fil, comprenant :
un ou plusieurs processeurs ; et
une mémoire destinée à maintenir des instructions exécutables par le ou les processeurs ;
dans lequel le ou les processeurs sont configurés pour mettre en œuvre le procédé d'accès selon l'une quelconque des revendications précédentes 7 à 12.
